# EUROPEAN PATENT SPECIFICATION

(11) **EP 2 582 094 B1**
(45) Date of publication and mention of the grant of the patent: **15.05.2019**
(21) Application number: 10852933.0
(22) Date of filing: 10.06.2010
(51) Int. Cl.: H04L 12/28, H04L 12/12, G06Q 50/06

(54) **NETWORK SYSTEM**
NETZWERKSYSTEM
SYSTÈME DE RÉSEAU

(43) Date of publication of application: 17.04.2013
(73) Proprietor: LG Electronics Inc., SEOUL, 07336 (KR)
(72) Inventor: KIM, Yang-Hwan, Changwon City Gyoungsangnam-do 641-711 (KR); LEE, Hoon-Bong, Changwon City Gyoungsangnam-do 641-711 (KR); LEE, Koon-Seok, Changwon City Gyoungsangnam-do 641-711 (KR); AHN, Jun-Ho, Changwon City Gyoungsangnam-do 641-711 (KR)
(74) Representative: Ter Meer Steinmeister & Partner
(86) International application number: PCT/KR2010/003750
(87) International publication number: WO 2011/155647

(56) References cited:
- WO-A1-99/22284
- KR-A- 20010 020 018
- KR-A- 20040 038 129
- KR-A- 20090 046 543
- US-A1- 2005 246 408
- "Application programming interface", wikipedia.org , 6 June 2010 (2010-06-06), XP002720436, Retrieved from the Internet: URL:http://en.wikipedia.org/w/index.php?ti tle=Application_programming_interface&oldi d=366408347 [retrieved on 2014-02-17]

## Description

### BACKGROUND

The present disclosure relates to a network system.

In general, a network system may comprise a plurality of components. Two or more component may configure the other component. The plurality of component may perform wired or wireless communication by means of a communication unit.
WO 99/22284 A1 relates to environmental condition control and energy-management system and method, wherein an indoor environmental condition control and energy-management system includes a plurality of inputs. A user input receives user input parameters including a desired indoor environmental condition range for at least one energy unit price point. An indoor environmental condition input receives a sensed indoor environmental condition. An energy price input receives a schedule of projected energy unit prices per time periods. A processor, coupled to the inputs, computes an environmental condition deadband range for multiple energy unit price points based on the user input parameters and controls at least one energy-consuming load device to maintain the indoor environmental condition within the computed deadband range for a then-current energy unit price point. In an embodiment, the environmental condition includes at least temperature and the at least one load device includes a heating and cooling system. The processor, in one embodiment, communicates through a communications link with at least one energy supply company and selects one energy supply company for a premise to minimize energy consumption cost.
Wikipedia describes an application programming interface as an interface implemented by a software program which enables it to interact with other software (http://en.wikipedia.org/w/index.php?title=Application_programming_interface&oldid =366408347).
US 2005/246408 A1 describes an integrated programmable system for controlling the operation of electrical and/or electronic appliances of a premises. The system consists of a two-layered, distributed network architecture design, with an outer appliance layer and an inner control layer. The appliance layer includes various electrical and/or electronic appliances and devices. All such appliances are connected to a central home server in the control layer, either directly or indirectly, via a common digital communication backbone. The home server allows the end user to control, adjust and program the criteria and manner of operation of the various appliances. The common digital communication backbone includes a central cable (bus) which connects all the appliances with the central control layer. Also incorporated in the control layer are a number of smart controllers each for directly controlling and monitoring the operation of one or more of the various electrical and/or electronic appliances in the appliance layer.

### SUMMARY

Embodiments provide a network system to perform the effective management of an energy source. The objects are solved by the features of the independent claim.

In one embodiment, a network system comprises: a first component configured to transmit or receive information; a second component configured to communicate with the first component; and a third component configured to communicate with the first component, wherein the first component comprises: a central manager; a communication unit for performing communication; and an application programming interface (API) that serves as an interface between the central manager and the communication unit,
wherein information or a signal transmitted/received into/from the communication unit is converted and transmitted into the central manager.

According to the embodiments, an energy source is effectively produces, uses, distributes, stores and the like, so that it is possible to perform the effective management of the energy source.

According to the embodiment, a plurality of component having different communication protocols can communicate each other.

### BRIEF DESCRIPTION OF THE DRAWINGS

Fig. 1 is a view schematically showing an example of a network system according to the present disclosure.
Fig. 2 is a block diagram schematically showing an example of the network system according to the present disclosure.
Fig. 3 is a block diagram showing an information transmission process on the network system according to the present disclosure.
Fig. 4 is a view showing the communication structure of components that constitute the network system according to a first embodiment.
Fig. 5 is a block diagram showing the detailed configuration of a first component in Fig. 4.
Fig. 6 is a view showing the communication structure of components that constitute the network system according to a second embodiment.
Fig. 7 is a block diagram showing the detailed configuration of a first component in Fig. 6.

### DETAILED DESCRIPTION OF THE EMBODIMENTS

In the description of embodiments, terms such as first, second, A, B, (a), (b) or the like may be used herein when describing components of the present invention. Each of these terminologies is not used to define an essence, order or sequence of a corresponding component but used merely to distinguish the corresponding component from other component(s).

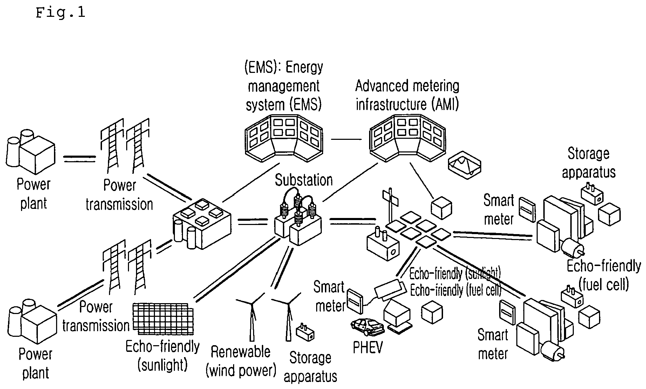

Fig. 1 is a view schematically showing an example of a network system according to the present disclosure.

The network system is a system for managing an energy source such as electricity, water or gas. The energy source means one of which amount generated or used can be metered. Therefore, even a source not mentioned above may be used as the energy source. Hereinafter, electricity will be described as an example of the energy source, and details of this specification may be identically applied to other energy sources.

Referring to Fig. 1, a network system according to an embodiment includes a power plant for producing electricity. The power plant may include a power plant for producing electricity through a thermal power generation or nuclear power generation and a power plant using water power, sunlight power, wind power or the like which is eco-friendly energy.

The electricity produced in the power plant is transmitted to a sub-control center through a power transmission line, and the sub-control center transmits the electricity to a substation so that the electricity is distributed to customers such as houses or offices.

Electricity produced by the eco-friendly energy is also transmitted to the substation so as to be distributed to each of the customers. The electricity transmitted from the substation is distributed to each of the offices or houses through electricity power storage, or is directly distributed to each of the offices or houses.

In a house using a home area network (HAN), electricity may be produced by itself through sunlight, fuel cells built in a plug-in hybrid electric vehicle (PHEV), or the like. Also, the produced electricity may be stored or distributed, or surplus electricity may be resold to the outside world.

The network system may include a smart meter for detecting the amount of electricity used in each customer (house, office or the like) in real time, and an advanced metering infrastructure (AMI) for metering the amount of electricity used in a plurality of customers.

The network system may further include an energy management system (EMS) for managing energy. The EMS may generate information on operations of one or more components with respect to energy (production of energy, distribution of energy, usage of energy, storage of energy, and the like). The EMS may generate at least a command for the operations of the components.

In this specification, a function or solution performed by the EMS may be referred to as an energy management function or energy management solution.

In the network system, one or more EMSs may be provided as a separate configuration, or the EMS may be included as an energy management function or energy management solution in one or more components.

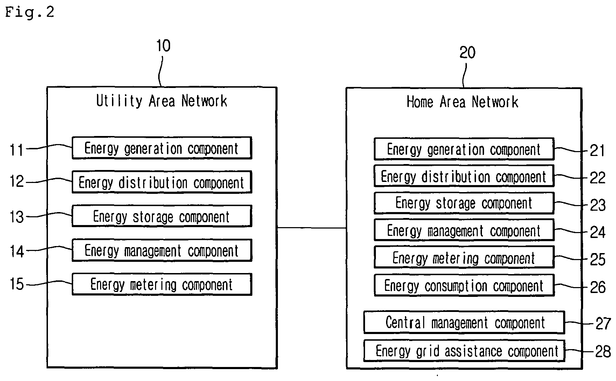

Fig. 2 is a block diagram schematically showing an example of the network system according to the present disclosure.

Referring to Figs. 1 and 2, the network system according to the present disclosure is configured by a plurality of components. For example, the components of the network system are a power plant, a substation, a sub-control center, an EMS, electric home appliances, a smart meter, a storage battery, a web server, an AMI, a home server, and the like.

In the present disclosure, each of the components may be configured by a plurality of sub-components. As an example, in a case of one component is an electric home appliance, sub-components may be a microcomputer (MICOM), a heater, a display and the like. That is, all that perform a specific function may be components in the present disclosure, and such components constitute the network system of the present disclosure.

Two components may communicate with each other by means of a communication unit. One network may be one component or may be configured by a plurality of components.

In this specification, the network system in which communication information is related to an energy source may be referred to as an energy grid.

A network system according to an embodiment may include a utility area network (UAN) 10 and a home area network (HAN) 20. The UAN 10 and the HAN 20 may perform wired or wireless communication by means of a communication unit.

In this specification, the term "home" means not only a household as a lexical meaning but also a group in which specific components such as buildings or companies gather. Also, the term "utility" means a group in which specific components outside the home gather.

The UAN 10 includes an energy generation component 11 for generating energy, an energy distribution component 12 for distributing or transmitting energy, an energy storage component 13 for storing energy, an energy management component 14 for managing energy, and an energy metering component 15 for metering information related to energy.

In a case where one or more components that constitute the UAN 10 consume energy, the components that consume the energy may be energy consumption components.

The energy generation component 11 may be a power plant as an example. The energy distribution component 12 distributes or transmits energy generated in the energy generation component 11 and/or energy stored in the energy storage component 13 to the energy consumption component 26 that consumes the energy. The energy distribution component 12 may be a power transmitter, substation, sub-control center, or the like.

The energy storage component 13 may be a storage battery, and the energy management component 14 generates information for driving one or more of the energy generation component 11, the energy distribution component 12, the energy storage component 13 and the energy consumption component 26, related to energy. The energy management component 14 may generate at least a command for the operation of a specific component.

The energy management component 14 may be an EMS. The energy metering component 15 may meter information related to the generation of energy, the distribution of energy, the usage of energy, the storage of energy, and the like. The energy metering component 15 may be an AMI as an example. The energy management component 14 may be a separate configuration, or may be included in another component as an energy management function.

The UAN 10 may receive information or may transmit information by a terminal component (not shown). The terminal component may be a gateway as an example. The terminal component may be provided at least one of the UAN 10 and the HAN 20.

Two components that constitute the UAN 10 may communicate with each other by means of a communication unit.

The HAN 20 includes an energy generation component 21 for generating energy, an energy distribution component 22 for distributing energy, an energy storage component 23 for storing energy, an energy management component 24 for managing energy, an energy metering component 25 for metering information related to energy, an energy consumption component 26 for consuming energy, a central management component 27 for controlling a plurality of components, and an energy grid assistance component 28.

The energy generation component 21 may be a home power generator, and the energy storage component 23 may be a storage battery. The energy management component 24 may be an EMS. The energy metering component 25 may meter information related to the generation of energy, the distribution of energy, the usage of energy, the storage of energy, and the like. The energy metering component 25 may be a smart meter as an example. The energy consumption component 26 may be, as an example, an electric home appliance or a heater, motor, display or the like, which constitutes the electric home appliance. In this embodiment, there is no limitation in the kind of the energy consumption component 26.

The energy management component 24 may be provided as a separate configuration or may be included in another component as an energy management function.

The energy generation component 21, the energy distribution component 22 and the energy storage component 23 may be individual components, or may constitute a single component.

The central management component 27 may be, as an example, a home server for controlling a plurality of electric home appliances.

The energy grid assistance component 28 is a component having a primary function while performing an additional function for the energy grid. For example, the energy grid assistance component 28 may be a web service providing component (e.g., a computer or the like), mobile device, television, or the like.

Two components that constitute the HAN 20 may communicate with each other by means of a communication unit.

The energy generation components 11 and 21, the energy distribution components 12 and 22, the energy storage components 13 and 23, the energy management components 14 and 24, the energy metering components 15 and 25, the energy consumption component 26 and the central management component 27 may independently exist, or two or more of them may constitute a single component.

For example, the energy management component 14 or 24, the energy metering component 15 or 25 and the central management component 27 may exist as single components so as to be configured as a smart meter, an EMS and a home server, which perform their functions, respectively. Alternatively, the energy management component 14 or 24, the energy metering component 15 or 25 and the central management component 27 may constitute a single system.

When a function is performed, it may be sequentially performed in a plurality of components and/or communication units. For example, an energy management function may be sequentially performed in the energy management component, the energy metering component and the energy consumption component.

In the network system, a plurality of UANs 10 may communicate with a single HAN 20, and a single UAN 10 may communicate with a plurality of HANs 20.

The component with a specific function, which constitutes the UAN and the HAN, may be configured as a plurality of components. For example, the energy generation component, the energy consumption component or the like may be configured as a plurality of components.

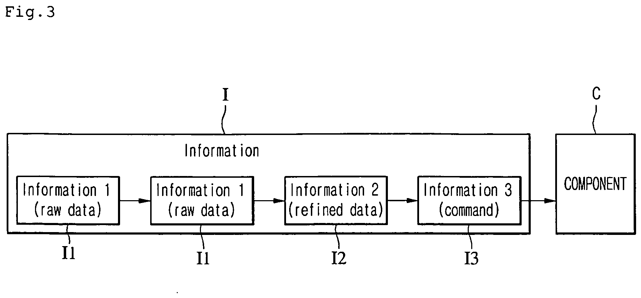

Fig. 3 is a block diagram showing an information transmission process on the network system according to the present disclosure.

Referring to Fig. 3, in the network system according to the present disclosure, a specific component C may receive information related to energy (hereinafter, referred to as energy information I) by means of a communication unit. The specific component C may further receive additional information (environment information, time information and the like) by means of the communication unit. In this instance, the information may be received from another component. That is, at least energy information is contained in the received information.

The specific component C may be a component that constitutes the UAN 10 or a component that constitutes the HAN 20.

As described above, the energy information I may be one of information related to electricity, water, gas and the like.

For example, the kind of information related to the electricity may include time-based pricing related to electricity, curtailment, grid emergency, grid reliability, energy increment related to energy amount, operation priority, and the like.

The information may be divided into scheduled information previously produced based on previous information, and real-time information changed in real time. The scheduled information and the real-time information may be divided by whether or not predict information after the current time (in the future).

The energy information I may be transmitted/received as a true or false signal such as a Boolean signal on the network system, or may be transmitted/received as a real price. Alternatively, the energy information I may be transmitted/received by being divided into a plurality of levels.

The energy information I may be divided into time of use (TOU) information, critical peak pattern (CPP) information or real time pattern (RTP) information according to the change in the pattern of data with respect to time.

According to the TOU information, a data is changed step by step depending on time. According to the CPP information, a data is changed step by step or in real time depending on time, and emphasis is displayed at a specific point of time. According to RTP information, a data is changed in real time depending on time.

In a case where the energy information is time-based pricing information as an example, the time-based pricing information is changed. The time-based pricing information may be transmitted/received as a true or false signal such as a Boolean signal on the network system, or may be transmitted/received as a real price. Alternatively, the time-based pricing information may be transmitted/received by being divided into a plurality of levels.

In a case where the specific component C receives a true or false signal such as a Boolean signal, one signal may be recognized as an on-peak signal, and the other signal may be recognized as an off-peak signal.

Alternatively, the specific component C may recognize information on at least one drive, which contains the time-based information, and may recognize an on-peak or off-peak signal by comparing the value of the recognized information with the value of reference information.

For example, in a case where the specific component C recognizes information divided into levels or real pricing information, it recognizes an on-peak or off-peak signals by comparing the value of the recognized information with the value of reference information.

In this case, the value of the information on drive may be at least one of time-based pricing, electric energy, the variation of time-based pricing, the variation of electric energy, the average of time-based pricing and the average of electric energy. The value of reference information may be at least one of an average, the average between maximum and minimum values of power information during a predetermined period of time and the reference variation of power information during the predetermined period of time (e.g., the slope of consumed electric energy per unit time).

The value of reference information may be determined in real time or may be previously determined. The value of reference information may be determined on the UAN or may be determined on the HAN (a customer's direct input or an input from the energy management component, the central management component or the like).

In a case where the specific component C (e.g., the energy consumption component) recognizes an on-peak signal (e.g., at a point of time of recognition), an output may be determined as zero (stop or maintenance of a stop state) or may be decreased. If necessary, the output may be restored or increased. The driving scheme of the specific component may be previously determined before the specific component is operated, or may be changed when the specific component recognizes an on-peak signal posterior to the start of operation.

Alternatively, in a case where the specific component C recognizes an on-peak signal (e.g., at a point of time of recognition), the output is maintained under an operable condition. In this case, the operable condition means that the value of the information on drive is less than a predetermined reference. The value of the information on drive may be time-based pricing, consumed electric energy, operation time, or the like. The predetermined reference may be a relative or absolute value.

The predetermined reference may be determined in real time or may be previously determined. The predetermined reference may be determined on the UAN or may be determined on the HAN (a customer's direct input or an input from the energy management component, the central management component or the like) .

Alternatively, in a case where the specific component C recognizes an on-peak signal (e.g., at a point of time of recognition), the output may be increased. However, although the output is increased at the point of time when the specific component recognizes the on-peak signal, the total output amount of the specific component during the entire drive period may be decreased or maintained as compared with that when the specific component is operated at a normal output level. Alternatively, although the output is increased at the point of time when the specific component recognizes the on-peak signal, the total consumed power or total energy usage cost of the specific component during the entire operation period may be decreased as compared that when the specific component is operated at a normal output level.

In a case where the specific component C recognizes an off-peak signal (e.g., at a point of time of recognition), the output may be increased. For example, in a case where the operation reservation of the specific component is set up, the drive of the specific component may be started before the setup time, or a component having a large output among a plurality of components may be first driven. In a case where the specific component is a refrigerator, supercooling may be performed by increasing an output as compared with the existing output (change in the state of cool air that is a medium for performing the function of the refrigerator). In a case where the specific component is a washing machine or washer, hot water may be stored by driving a heater earlier than the time when the heater is to be operated (storage of hot water that is an additional medium for performing the function of the washing machine or washer). Alternatively, in a case where the specific component is a refrigerator, cool air may be stored in a separate supercooling chamber by increasing an output as compared with the existing output. Alternatively, in a case where the specific component recognizes an off-peak signal (e.g., at a point of time of recognition), electricity may be stored.

The curtailment information is information related to a mode in which the specific component is stopped or a small amount of energy usage cost is taken. As an example, the curtailment information may be transmitted/received as a true or false signal such as a Boolean signal on the network system.

If the specific component C recognizes curtailment information, the output may be determined as zero (stop or maintenance of a stop state) or may be decreased as described above.

The grid emergency information is information related to a power failure or the like. As an example, the grid emergency information may be transmitted/received as a true or false signal such as a Boolean signal on the network system. The information related to a power failure or the like has a relation with the reliability of a component using energy.

In a case where the specific component C recognizes grid emergency information, it may be immediately shut down.

The grid reliability information is information related to the supply amount of electricity supplied or information related to the quality of electricity. The grid reliability information may be transmitted/received as a true or false signal such as a Boolean signal on the network system, or may be determined by a component (e.g., an electric home appliance) through the frequency of AC power supplied to the component.

That is, if a frequency lower than the frequency of AC power supplied to the component is sensed, it may be determined that the amount of electricity supplied is small (information on the deficiency of the amount of electricity supplied). If a frequency higher than the frequency of AC power supplied to the component is sensed, it may be determined that the amount of electricity supplied is large (information on the excess of the amount of electricity supplied).

In a case where the specific component recognizes shortage of the amount of electricity or poor quality of electricity in the grid reliability information, an output may be determined as zero (stop or maintenance of a stop state) or may be decreased. If necessary, the output may be restored or increased.

The energy increment information is information related to a state that surplus electricity is generated because the amount of electricity used by a component is less than that of power generation. As an example, the energy increment information may be transmitted/received as a true or false signal such as a Boolean signal on the network system.

In a case where the specific component C recognizes energy increment information, the output may be increased. For example, in a case where the operation reservation of the specific component is set up, the drive of the specific component may be started before the setup time, or a component having a large output among a plurality of components may be first driven. In a case where the specific component is a refrigerator, supercooling may be performed by increasing an output as compared with the existing output. In a case where the specific component is a washing machine or a washer, hot water may be stored by driving a heater earlier than the time when the heater is to be operated.

Each of the kinds of information related to energy may be divided into first information I1 that is raw information, second information 12 that is refined information, and third information 13 that is information for performing the function of the specific component. That is, the first information is a raw data, the second information is a refined data, and the third information is a command for performing the function of the specific component.

The information related to energy is included in a signal, and the signal is transmitted. In this instance, one or more of the first to third information may be transmitted several times while the content of the information is not converted but only the signal including the information is converted.

For example, as shown in Fig. 3, a component that receives a signal including the first information may convert only the signal and transmit a new signal including the first information to another component.

Therefore, it is described in this embodiment that the conversion of signal is a different concept from the conversion of information. In this instance, it can be readily understood that when the first information is converted into the second information, the signal including the first information is also converted into the signal including the second information.

However, the third information may be transmitted several times in the state that the content of the third information is converted or in the state that only the signal including the third information is converted while the content of the third information is identically maintained.

Specifically, in a case where the first information is raw information on time-based pricing, the second information may be refined information on the time-based pricing. The refined information on the time-based pricing is information in which the time-based pricing is divided into a plurality of levels or analysis information. The third information is a command generated based on the second information.

The specific component may generate, transmit or receive one or more of the first to third information. The first to third information are not necessarily transmitted or received in sequence. Only a plurality of pieces of third information without the first and second information may be transmitted in sequence or parallel. Alternatively, the first and third information may be transmitted or received together, the second and third information may be transmitted or received together, or the first and second information may be transmitted or received together.

As an example, in a case where the specific component receives the first information, it may transmit the second information or may transmit the second and third information.

In a case where the specific information receives only the third information, it may generate and transmit new third information.

Meanwhile, in the relation between two pieces of information, one is a message and the other is a response for the message. Thus, each of the components that constitute the network system may transmit or receive a message. In a case where each of the components receives a message, it may respond to the message. Therefore, in the case of an individual component, the transmission of a message is a relative concept with the response for the message.

The message may include a data (first or second information) and/or a command (third information).

The command (third information) may include a command for storing the data, a command for generating the data, a command for processing the data (including the generation of an additional data), a command for generating an additional command, a command for transmitting the additionally generated command, a command for transmitting a received command, and the like.

In this specification, the response for the received message means storage of the data, processing of the data (including generation of an additional data), generation of a new command, transmission of the newly generated command, simple transmission of a received command (including generation of a command for transmitting the received command to another component), operation, transmission of the stored information, transmission of an acknowledge message (acknowledge character or negative acknowledge character), or the like.

For example, in a case where the message is first information, the specific component that receives the first information may generate second information by processing the first information, or may generate the second information and new third information, as a response for the message.

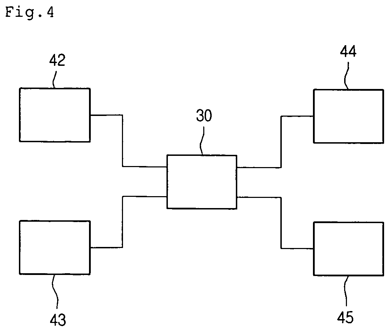

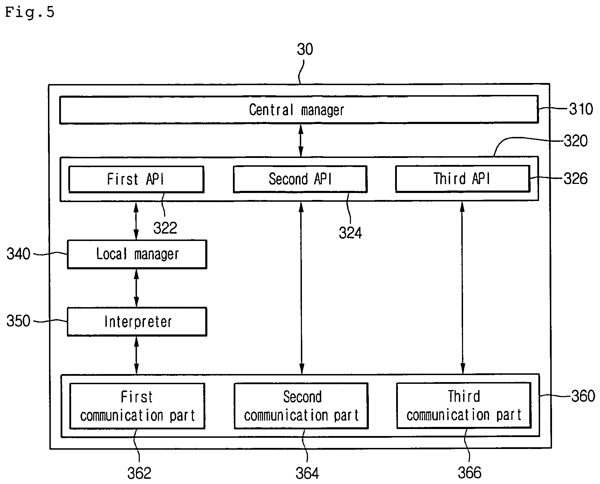

Fig. 4 is a view showing the communication structure of components that constitute the network system according to a first embodiment. Fig. 5 is a block diagram showing the detailed configuration of a first component in Fig. 4.

Referring to Figs. 2 to 5, a first component 30 may communicate with second to fifth components 42, 43, 44 and 45. Hereinafter, it will be described as an example that the first component 30 is a central management component (home server), the second and third components 42 and 43 are energy consumption components (electric home appliances), the fourth component 44 is an energy metering component (smart meter), and the fifth component 45 is a component that constitutes the UAN. The components may communicate with each other by means of a communication unit. In the network system illustrated in Fig. 4, each of the components is directly connected to the first component 30 to communicate with the first component 30. However, in a case where each of the components 42, 43, 44 and 45 is connected to new components to communicate with the new components, the network system may be extended and operated by the new components.

The second and third components 42 and 43 may be the same kind of component or different kinds of components. In this embodiment, it will be described as an example that the second and third components 42 and 43 are different kinds of energy consumption components.

The first component 30 may simply transmit information received from the fourth component 44 and/or the fifth component 45 to the second component 42 and/or the third component 43, or may process the received information and transmit the processed information.

The first component 30 may simply transmit information received from the second component 42 and/or the third component 43 to the fourth component 44 and/or the fifth component 45 (a signal may be converted), or may process the received information and transmit the processed information (the information is converted.

The first component 30 includes a communication unit 360 for performing communication with another component, a central manager 310 for managing the entire operation and/or information processing of the first component, and an application programming interface 320 (hereinafter, referred to as an API for performing an interface between the communication unit 360 and the central manager 310 (specifically, application software).

The communication unit 360 includes a first communication part 362 for performing communication with the second and third components 42 and 43, a second communication part 364 for performing communication with the fourth component 44, and a third communication part 366 for performing communication with the fifth component 45.

In this instance, the first and second communication parts 362 and 364 may use different communication protocols from each other. As an example, the first communication part 362 may use Zigbee and the second communication part 364 may use Wi-fi. In this embodiment, the kind of communication protocol or method used by the first and second communication parts 362 and 364 is not limited. The third communication component 366 may use Internet communication as an example.

The API 320 includes a first API 322, a second API 324 and a third API 326. The third API 326 is an interface between the central manager 310 and the third communication part 366, and the first API 322 is an interface between the first communication part 362 and the central manager 310. The second API 324 is an interface between the second communication part 362 and the central manager 310.

The first component 30 further includes a local manager 340 and an interpreter 350. In a case where the information to be transmitted/received between the API 320 and the communication unit 360 is information related to operations of energy consumption components (electric home appliances), the local manager 340 outputs information corresponding to the respective energy consumption components. The interpreter 350 interprets information transmitted from the local manager 340 to the communication unit 360 or information received in the communication unit 360. The information outputted from the interpreter 350 is used to set or get values of information related to the respective energy consumption components.

The local manager 340 includes a memory (not shown) in which information related to one or more energy consumption components is stored. Alternatively, the local manager 340 may be connected to a memory in which information related to one or more energy consumption components is stored. The information related to each of the energy consumption components may include operation information of each of the energy consumption components and information for controlling the energy consumption components. The information related to each of the energy consumption components may further include software download information for operating each of the energy consumption components and information for remote controlling/monitoring.

As an example, in a case where a plurality of energy consumption components include a washing machine, a refrigerator and a cooking appliance, information related to each of the energy consumption components is stored in the memory. The information related to each of the energy consumption components may be changed as components connected to the network system are changed.

If a signal is transmitted from the API 320 to the local manager 340, information corresponding to a specific energy consumption component is outputted. In a case where a plurality of energy consumption components exist, information on the plurality of energy consumption components is outputted. The interpreter 350 interprets the information transmitted from the local manager 340 into a machine language so as to transmit the information to the energy consumption components. The machine language may be a signal used to set or get the operation information of the energy consumption components.

The information transmission process in the first component 30 will be described.

As an example, the first component 30 may receive energy information (e.g., an energy curtailment signal: first command) from the forth component 45 through the second communication part 364. The received energy information is transmitted to the central manager 310 through the second API 324. In the process of information transmission between the second API 324 and the central manager 310, only a signal including the information is converted, and the content of the information is not converted.

Since the energy information is information related to the energy consumption reduction of the energy consumption components, the central manager 310 transmits information (second command) related to operations of the energy consumption components to the API 320. As an example, the central manager 310 transmits information necessary for turning off power of the washing machine or refrigerator.

Then, the information is transmitted from the first API 322 to the local manager 340.

The local manager 340 transmits information (third command) for controlling the operation of each of the energy consumption components to the interpreter 350 based on the information transmitted from the first API 322. As an example, in a case where the information transmitted from the first API 322 is information having different kinds of energy consumption components as targets, the local manager 340 transmits information related to the control of each of the energy consumption components to the interpreter 350. In this case, since the local manager 340 receives the second command and outputs the third command, the information inputted to the local manager 340 is converted and outputted by the local manager 340.

Subsequently, the interpreter 350 interprets the information transmitted from the local manager 340 into a machine language (signal). Then, the converted signal is transmitted to the target energy consumption components (second and third components) through the first communication part 362. Then, the energy consumption components (second and third components) are finally turned off so as to reduce energy.

Although it has been described above that the first component receives information through the second communication part, the first component may receive information through the third component so that the information related to the energy consumption components is outputted.

Meanwhile, the second and third components 42 and 43 may transmit their own operation information to the first component 30. Since the information transmitted from the second and third components 42 and 43 is information related to operations of the energy consumption components, the signal received in the first communication part 362 is transmitted to the central manager 310 via the interpreter 350, the local manager 360 and the first API 322. In such an information transmission process, the information related to the second and third components 42 and 43 is stored in the local manager 340. In this embodiment, since the information related to the energy consumption components is stored in the local manager, the local manager may be understood as a virtual energy consumption component (abstraction model).

The central manager 310 may transmit the received information to the second communication part 364 and/or the third communication part 366.

The information received through the communication unit 360 may be transmitted directly to the API 320, or may be converted (via the interpreter and the local manager) and then transmitted to the API 320, based on the kind of information (or the type of signal).

The information transmitted from the central manager 340 may be transmitted directly to the communication unit 360, or may be converted and then transmitted to the communication unit 360.

As another example, the interpreter may be included in the local manager 340, and the information received through the communication unit 360 is transmitted to the local manager 340. However, converted information may be outputted, or information may be outputted as it is without converting the information.

Meanwhile, in a case where the information transmitted to the API 320 through the second or third communication part 364 or 366 is information (raw data or refined data) related to time-based pricing, the central manager 310 determines the presence of on-peak time. In the case of the on-peak time, the central manager 310 may transmit the information (first command) for controlling the operations of the energy consumption components to the API 320. Then, the information is converted through the local manager 340, and the converted information (second command) is transmitted to the energy consumption components through the first communication part 362. Alternatively, the central manager 310 may transmit the information related to the time-based pricing to the first communication part 362 through the second API 324 without determining the presence of on-peak time. In this case, the information may be converted or not converted. That is, in a case where the central manager directly receives first information (raw data), it may transmit the first information as it is, or convert the first information into a second information (refined data) and then transmit the second information.

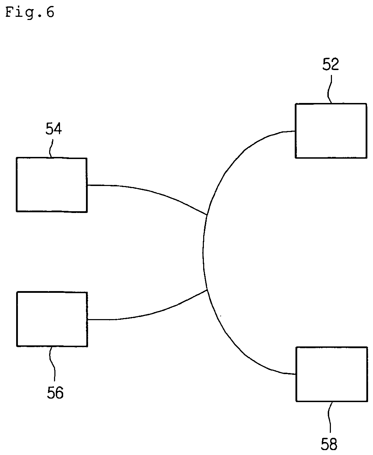

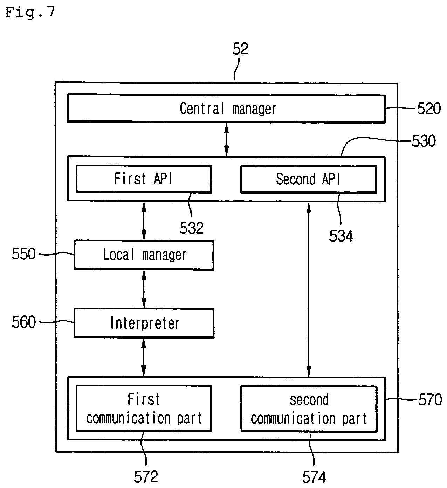

Fig. 6 is a view showing the communication structure of components that constitute the network system according to a second embodiment. Fig. 7 is a block diagram showing the detailed configuration of a first component in Fig. 6.

Referring to Figs. 2, 6 and 7, the network system of this embodiment may include at least first to fourth components 52, 54, 56 and 58.

The first component 52 may communicate with the second to fourth components 54, 56 and 58. The fourth component 58 may communicate with the first to third components 52, 54 and 56.

Hereinafter, it will be described as an example that the first component 52 is a central management component (home server), the second and third components 54 and 56 are energy consumption components (electric home appliances), and the fourth component 58 is an energy metering component (smart meter). The central management component (home server) may be understood as a component necessary for controlling at least a component that constitutes the HAN 20.

The first component 52 includes a communication unit 570 for performing communication with another component, a central manager 520 for managing the entire operation and/or information transmission/reception of the first component 52, and an application programming interface 530 (hereinafter, referred to as an API) that serves as an interface between the communication unit 570 and the central manager 520 (specifically, application software).

The communication unit 570 may include a first communication component 572 for performing communication with the second to fourth components 54, 56 and 58, and a second communication component 574 for performing Internet communication.

The API 530 includes a first API 532 and a second API 534. The second API 534 is an interface between the central manager 520 and the second communication part 574, and the first API 530 is an interface between the first communication part 572 and the central manager 520.

The first component 52 further includes a local manager 550 and an interpreter 560. In a case where the information to be transmitted/received between the API 532 and the communication unit 570 is information related to operations of energy consumption components (electric home appliances), the local manager 550 outputs information corresponding to the respective energy consumption components. The interpreter 560 interprets information transmitted from the local manager 550 to the communication unit 570 or information received in the communication unit 570.

In this embodiment, the functions of the interpreter and the local manager are identical to those of the third embodiment, and therefore, their detailed descriptions will be omitted.

The information transmission process in the first component 52 will be described.

As an example, the first component 52 may receive energy information (e.g., energy curtailment signal) from the fourth component 58 through the first communication part 572. Alternatively, the first component 52 may receive energy information from an external component connected to Internet through the second communication part 574.

The received energy information is transmitted directly to the first or second API 532 or 534 and then transmitted to the central manager 520. Since the energy information is information related to the energy consumption reduction of the energy consumption components, the central manager 520 transmits information related to the operations of the energy consumption components to the first API 532. As an example, the central manager 520 transmits information necessary for turning off power of a washing machine or refrigerator.

Then, the information is transmitted from the first API 532 to the local manager 550.

The local manager 550 transmits information for controlling the operation of each of the energy consumption components to the interpreter 560 based on the information transmitted from the first API 532. As an example, in a case where the information transmitted from the first API is information related to different kinds of energy consumption components, the local manager 550 transmits information related to the control of each of the energy consumption components to the interpreter 560.

Subsequently, the interpreter 560 interprets the information transmitted from the local manager 560 into a machine language (signal). Then, the interpreted signal is transmitted to the energy consumption components through the first communication part 572. Then, the energy consumption components are finally turned off so as to reduce energy.

Meanwhile, the second and third components 54 and 56 may transmit their own operation information to the first component 52. Since the information transmitted from the second and third components is information related to the operations of the energy consumption components, the signal received in the first communication part 572 is transmitted to the central manager 520 via the interpreter 560, the local manager 550 and the first API 532. In such an information transmission process, the information related to the first and second components is stored in the local manager 550.

The central manager 520 may transmit the received information to the first communication part 572. Then, the information of the second and third components 54 and 56 is transmitted to the fourth component 58.

The information received through the communication unit 570 may be transmitted directly to the API 530, or may be converted (via the interpreter and the local manager) and then transmitted to the API 530, based on the kind of information (or the type of signal).

On the contrary, the information transmitted from the central manager 520 may be transmitted directly to the communication unit 570, or may be converted and then transmitted to the communication unit 570.

Meanwhile, in a case where the information transmitted to the API 530 through the second communication part 574 is information related to time-based pricing, the central manager 520 determines the presence of on-peak time. In the case of the on-peak time, the central manager 520 may transmit the information for controlling the operations of the energy consumption components to the API 530. Then, the information is transmitted to the energy consumption components through the local manager, the interpreter and the first communication part. In this case, the first component may be understood as an energy management component.

Although it has been described above that two energy consumption components communicate with the first component, the number of energy consumption components that communicate with the first component is not limited.

Although it has been described as an example that the first component is a home server, the first component may be an energy management component. In this case, the fourth component may be a central management component, an energy management component, a smart meter, or the like.

As another example, the first component may be a smart meter. In this case, the fourth component may be a central management component, an energy management component, or the like.

As still another example, the first component may be a terminal component (e.g., a gate way).

As still another example, each of the second and third components may be an energy generation component, an energy storage component or the like, which constitutes the HAN. That is, one or more of the energy generation component, the energy consumption component and the energy storage component may communicate with the first component. In addition to information related to the energy consumption component, information related to the energy generation component (e.g., information related to the operation of the energy generation component) and information related to the energy storage component (e.g., information related to the operation of the energy storage component) may be stored in the memory included in a local network or connected to the local network.

Although it has been described above that the first component performs Internet communication, the Internet communication may not be performed.

Although it has been described in the first embodiment that a single local manager is provided, a plurality of local managers may be provided. As an example, a first local manager may process information on an electric home appliance such as a refrigerator or washing machine, and a second local manager may process information on a display product such as a television or monitor.

## Claims

1. A network system, comprising:
a first component (30) configured to transmit or receive information;
a second component (42) configured to communicate with the first component (30);
a third component (43) configured to communicate with the first component (30); and
a fourth component (44) configured to communicate with the first component (30), the fourth component (44) is an energy metering component,
wherein the first component (30) comprises:
a central manager (310);
a communication unit (360) comprising:
a first communication part (362) for performing communication with the second component (42) and the third component (43); and
a second communication part (364) for performing communication with the fourth component (44);
a local manager (340);
an interpreter (350); and
an application programming interface, API, (320) that serves as an interface between the central manager (310) and the communication unit (360), wherein the API (320) comprises:
a first API (322) configured to communicate with the first communication part (362) of the communication unit (360) through the local manager (340) and the interpreter (350), and
a second API (324) configured to directly communicate with the second communication part (364) of the communication unit (360);
wherein energy information is received from the fourth component (44) through the second communication part (364) of the communication unit (360) and is transmitted to the central manager (310) through the second API (324);
wherein, since the energy information is information related to energy consumption reduction of the second and the third component (42, 43), the central manager (310) is configured to transmit information related to operations of the second and/or third component (42, 43) to the local manager (340) through the first API (322);
wherein the local manager (340) is configured to convert the information transmitted from the first API (322) for controlling the operation of each of the second and third component (42, 43) and to transmit the converted information to the interpreter (350);
wherein the interpreter (350) is configured to interpret the information transmitted from the local manager (340) into a machine language signal; and
wherein the interpreted information is transmitted to the second and third components (42, 43) through the first communication part (362).

2. The network system according to claim 1, wherein the second and third component (42, 43) are configured to transmit own operation information through the first communication part (362) of the first component (30), wherein the information is transmitted to the central manager (310) via the interpreter (340) and the local manger (350).

3. The network system according to claim 1, wherein information related to the second component (42) is stored in the local manager (340).

4. The network system according to claim 1, wherein the local manager (340) is connected to a memory that has information related to the second component (42) stored therein.

5. The network system according to claim 1, wherein the communication unit (360) further comprises
a third communication part (366) configured to perform communication with a fifth component (45).

6. The network system according to claim 1, wherein a communication protocol between the first and second components (30, 42) is equal to or different from a communication protocol between the first and third components (30, 43).

7. The network system according to claim 1, wherein the second component (42) is selected from a group of an energy consumption component for consuming energy, an energy generation component for generating energy, and an energy storage component for storing energy.

8. The network system according to claim 1, wherein a fifth component (44) is configured to communicate with the first component (30), the fifth component (45) being a component constituting a utility area network (UAN).

9. The network system according to claim 2, wherein the operation information received from the second and third components (42, 43) is transmitted to the second communication part (364) and/or a third communication part (366) of the communication unit (360) by the central manager (310).

10. The network system according to claim 1, wherein the first component (30) is one of a central management component (52) that constitutes a home area network, HAN; a central management component that constitutes a utility area network, UAN; or an energy management component; or a gateway.

11. The network system according to claim 1, wherein the local manager (340) comprises a first local manager for processing information on electrical home appliances and a second local manager for processing information on displaying products.

## Patentansprüche

1. Netzwerksystem, umfassend:
eine erste Komponente (30), die dazu ausgelegt ist, Informationen zu senden oder zu empfangen;
eine zweite Komponente (42), die dazu ausgelegt ist, mit der ersten Komponente (30) zu kommunizieren;
eine dritte Komponente (43), die dazu ausgelegt ist, mit der ersten Komponente (30) zu kommunizieren; und
eine vierte Komponente (44), die dazu ausgelegt ist, mit der ersten Komponente (30) zu kommunizieren, wobei die vierte Komponente (44) eine Energiemesskomponente ist,
wobei die erste Komponente (30) umfasst:
einen zentralen Manager (310);
eine Kommunikationseinheit (360), umfassend:
einen ersten Kommunikationsteil (362) zum Durchführen einer Kommunikation mit der zweiten Komponente (42) und der dritten Komponente (43); und
einen zweiten Kommunikationsteil (364) zum Durchführen einer Kommunikation mit der vierten Komponente (44);
einen lokalen Manager (340);
einen Interpreter (350); und
eine Anwendungsprogrammierschnittstelle, API, (320), die als eine Schnittstelle zwischen dem zentralen Manager (310) und der Kommunikationseinheit (360) dient, wobei die API (320) umfasst:
eine erste API (322), die dazu ausgelegt ist, mit dem ersten Kommunikationsteil (362) der Kommunikationseinheit (360) über den lokalen Manager (340) und den Interpreter (350) zu kommunizieren, und eine zweite API (324), die dazu ausgelegt ist, mit dem zweiten Kommunikationsteil (364) der Kommunikationseinheit (360) direkt zu kommunizieren;
wobei Energieinformationen von der vierten Komponente (44) durch den zweiten Kommunikationsteil (364) der Kommunikationseinheit (360) empfangen werden und durch die zweite API (324) an den zentralen Manager (310) übertragen werden;
wobei, da die Energieinformationen Informationen bezüglich einer Verringerung des Energieverbrauchs der zweiten und der dritten Komponente (42, 43) sind, der zentrale Manager (310) dazu ausgelegt ist, Informationen bezüglich einem Betrieb der zweiten und/oder dritten Komponente (42, 43) über die erste API (322) an den lokalen Manager (340) zu übertragen; wobei der lokale Manager (340) dazu ausgelegt ist, die von der ersten API (322) übertragenen Informationen zur Steuerung des Betriebs von jeder der zweiten und der dritten Komponente (42, 43) umzuwandeln und die umgewandelten Informationen an den Interpreter (350) zu übertragen;
wobei der Interpreter (350) dazu ausgelegt ist, die von dem lokalen Manager (340) übertragenen Informationen als ein Maschinensprachsignal zu interpretieren; und
wobei die interpretierten Informationen durch den ersten Kommunikationsteil (362) an die zweite und dritte Komponente (42, 43) übertragen werden.

2. Netzwerksystem nach Anspruch 1, wobei die zweite und die dritte Komponente (42, 43) dazu ausgelegt sind, eigene Betriebsinformationen durch den ersten Kommunikationsteil (362) der ersten Komponente (30) zu übertragen, wobei die Informationen über den Interpreter (340) und den lokalen Manager (350) an den zentralen Manager (310) übertragen werden.

3. Netzwerksystem nach Anspruch 1, wobei Informationen bezüglich der zweiten Komponente (42) in dem lokalen Manager (340) gespeichert sind.

4. Netzwerksystem nach Anspruch 1, wobei der lokale Manager (340) mit einem Speicher verbunden ist, der darin gespeicherte Informationen bezüglich der zweiten Komponente (42) aufweist.

5. Netzwerksystem nach Anspruch 1, wobei die Kommunikationseinheit (360) ferner umfasst einen dritten Kommunikationsteil (366), der dazu ausgelegt ist, eine Kommunikation mit einer fünften Komponente (45) durchzuführen.

6. Netzwerksystem nach Anspruch 1, wobei ein Kommunikationsprotokoll zwischen der ersten und der zweiten Komponente (30, 42) einem Kommunikationsprotokoll zwischen der ersten und der dritten Komponente (30, 43) gleicht oder davon verschieden ist.

7. Netzwerksystem nach Anspruch 1, wobei die zweite Komponente (42) aus einer Gruppe einer Energieverbrauchskomponente zum Verbrauch von Energie, einer Energieerzeugungskomponente zur Erzeugung von Energie, und einer Energiespeicherkomponente zum Speichern von Energie ausgewählt ist.

8. Netzwerksystem nach Anspruch 1, wobei eine fünfte Komponente (44) dazu ausgelegt ist, mit der ersten Komponente (30) zu kommunizieren, wobei die fünfte Komponente (45) eine Komponente ist, die ein Versorgungsgebietsnetzwerk (UAN) bildet.

9. Netzwerksystem nach Anspruch 2, wobei die von der zweiten und der dritten Komponente (42, 43) empfangenen Betriebsinformationen durch den zentralen Manager (310) an den zweiten Kommunikationsteil (364) und/oder einen dritten Kommunikationsteil (366) der Kommunikationseinheit (360) übertragen werden.

10. Netzwerksystem nach Anspruch 1, wobei die erste Komponente (30) eine zentrale Verwaltungskomponente (52), die ein Heimnetzwerk HAN bildet; eine zentrale Verwaltungskomponente, die ein Versorgungsgebietsnetzwerk (UAN) bildet; oder eine Energiemanagementkomponente; oder ein Gateway ist.

11. Netzwerksystem nach Anspruch 1, wobei der lokale Manager (340) einen ersten lokalen Manager zum Verarbeiten von Informationen auf elektrischen Haushaltsgeräten und einen zweiten lokalen Manager zum Verarbeiten von Informationen zum Anzeigen von Produkten umfasst.

## Revendications

1. Système de réseau, comprenant :
un premier composant (30) configuré pour transmettre ou recevoir des informations ;
un deuxième composant (42) configuré pour communiquer avec le premier composant (30) ;
un troisième composant (43) configuré pour communiquer avec le premier composant (30) ; et
un quatrième composant (44) configuré pour communiquer avec le premier composant (30), le quatrième composant (44) étant un composant de mesure d'énergie,
dans lequel le premier composant (30) comprend :
un gestionnaire central (310) ;
une unité de communication (360) comprenant :
une première partie de communication (362) pour effectuer une communication avec le deuxième composant (42) et le troisième composant (43) ; et
une deuxième partie de communication (364) pour effectuer une communication avec le quatrième composant (44) ;
un gestionnaire local (340) ;
un interprète (350) ; et
une interface de programmation d'application, API, (320) qui sert d'interface entre le gestionnaire central (310) et l'unité de communication (360), dans lequel l'API (320) comprend :
une première API (322) configurée pour communiquer avec la première partie de communication (362) de l'unité de communication (360) par l'intermédiaire du gestionnaire local (340) et de l'interprète (350), et
une deuxième API (324) configurée pour communiquer directement avec la deuxième partie de communication (364) de l'unité de communication (360) ;
dans lequel des informations d'énergie sont reçues en provenance du quatrième composant (44) par l'intermédiaire de la deuxième partie de communication (364) de l'unité de communication (360) et sont transmises à destination du gestionnaire central (310) par l'intermédiaire de la deuxième API (324) ;
dans lequel, puisque les informations d'énergie sont des informations relatives à une réduction de consommation d'énergie des deuxième et troisième composants (42, 43), le gestionnaire central (310) est configuré pour transmettre des informations relatives à des opérations du deuxième composant et/ou du troisième composant (42, 43) à destination du gestionnaire local (340) par l'intermédiaire de la première API (322) ;
dans lequel le gestionnaire local (340) est configuré pour convertir les informations transmises depuis la première API (322) pour commander le fonctionnement de chacun des deuxième et troisième composants (42, 43) et pour transmettre les informations converties à l'interprète (350) ;
dans lequel l'interprète (350) est configuré pour interpréter les informations transmises depuis le gestionnaire local (340) dans un signal de langage machine ; et
dans lequel les informations interprétées sont transmises à destination des deuxième et troisième composants (42, 43) par l'intermédiaire de la première partie de communication (362).

2. Système de réseau selon la revendication 1, dans lequel les deuxième et troisième composants (42, 43) sont configurés pour transmettre leurs propres informations de fonctionnement par l'intermédiaire de la première partie de communication (362) du premier composant (30), dans lequel les informations sont transmises à destination du gestionnaire central (310) par l'intermédiaire de l'interprète (340) et du gestionnaire local (350).

3. Système de réseau selon la revendication 1, dans lequel des informations relatives au deuxième composant (42) sont mémorisées dans le gestionnaire local (340).

4. Système de réseau selon la revendication 1, dans lequel le gestionnaire local (340) est connecté à une mémoire ayant des informations relatives au deuxième composant (42) mémorisées dans celle-ci.

5. Système de réseau selon la revendication 1, dans lequel l'unité de communication (360) comprend en outre :
une troisième partie de communication (366) configurée pour effectuer une communication avec un cinquième composant (45).

6. Système de réseau selon la revendication 1, dans lequel un protocole de communication entre les premier et deuxième composants (30, 42) est identique ou différent d'un protocole de communication entre les premier et troisième composants (30, 43)

7. Système de réseau selon la revendication 1, dans lequel le deuxième composant (42) est sélectionné dans un groupe d'un composant de consommation d'énergie pour une consommation d'énergie, d'un composant de génération d'énergie pour une génération d'énergie, et d'un composant de stockage d'énergie pour un stockage d'énergie.

8. Système de réseau selon la revendication 1, dans lequel le cinquième composant (44) est configuré pour communiquer avec le premier composant (30), le cinquième composant (45) étant un composant constituant un réseau utilitaire (UAN).

9. Système de réseau selon la revendication 2, dans lequel les informations de fonctionnement reçues en provenance des deuxième et troisième composants (42, 43) sont transmises à destination de la deuxième partie de communication (364) et/ou d'une troisième partie de communication (366) de l'unité de communication (360) par le gestionnaire central (310).

10. Système de réseau selon la revendication 1, dans lequel le premier composant (30) est l'un d'un composant de gestion central (52) constituant un réseau domestique, HAN ; d'un composant de gestion central constituant un réseau utilitaire, UAN ; ou d'un composant de gestion d'énergie ; ou d'une passerelle.

11. Système de réseau selon la revendication 1, dans lequel le gestionnaire local (340) comprend un premier gestionnaire local pour le traitement d'informations sur des appareils ménagers électriques et un deuxième gestionnaire local pour le traitement d'informations sur des produits d'affichage.
